# EUROPÄISCHE PATENTSCHRIFT

(11) **EP 3 007 999 B1**
(45) Veröffentlichungstag und Bekanntmachung des Hinweises auf die Patenterteilung: **29.03.2017**
(21) Anmeldenummer: 14727457.5
(22) Anmeldetag: 28.05.2014
(51) Int. Cl.: B65H 1/10, B65B 5/10, B65G 69/16, B65H 31/12, B65H 31/10

(54) **REDUZIEREN DES ENERGIEVERBRAUCHS IN EINER ANLAGE**
ENERGY CONSUMPTION REDUCTION IN A SYSTEM
RÉDUCTION DE LA CONSOMMATION D'ÉNERGIE D'UNE INSTALLATION

(30) Priorität: 11.06.2013 DE 102013106052
(43) Veröffentlichungstag der Anmeldung: 20.04.2016
(73) Patentinhaber: Deutsche Post AG, 53113 Bonn (DE)
(72) Erfinder: HARTMANN, Bernd, 53501 Grafschaft-Leimersdorf (DE)
(74) Vertreter: Cohausz & Florack
(86) Internationale Anmeldenummer: PCT/EP2014/061019
(87) Internationale Veröffentlichungsnummer: WO 2014/198535

(56) Entgegenhaltungen:
- WO-A1-85/04387
- WO-A1-2012/123513
- DE-A1-102008 032 717
- US-A- 4 662 809
- US-A1- 2010 038 846

## Beschreibung

### GEBIET DER ERFINDUNG

Die vorliegende Erfindung betrifft die Reduzierung des Energieverbrauchs in einer Anlage, insbesondere in einer Anlage, in der Vorrichtungen eingesetzt werden, um Gegenstände aufzunehmen und zu transportieren.

### HINTERGRUND DER ERFINDUNG

Eine solche Anlage kann beispielsweise eine Sortieranlage sein. In einer Sortieranlage können Gegenstände von einem Sorter nach vorgegebenen Kriterien sortiert werden. Endstellen der Sortieranlage haben eine Pufferfunktion und dienen der logistischen Entkopplung des Sorters von der weiteren Verarbeitung. Endstellen können beispielsweise in Form einer ein- oder mehrstufigen Rutsche ausgebildet sein, auf der die vom Sorter nach einem bestimmten Kriterium ausgegebenen Gegenstände bis zur Entnahme nachrutschend zwischenlagern. Die Gegenstände können dann von einer Person in eine Vorrichtung verladen werden, in der die Gegenstände weitertransportiert werden. Im Falle einer Paketsortieranlage kann die Vorrichtung beispielsweise ein Rollcontainer sein, in dem von dem Sorter ausgegebene Pakete in einen Wechselbehälter oder Sattelauflieger verbracht werden, der dann mittels eines Lastkraftwagens an einen Zielort gefahren wird. Sortieranlagen können aber auch zum Sortieren von beliebigen anderen Gegenständen, wie beispielsweise Gepäckstücken, eingesetzt werden.

In anderen Anlagen können Vorrichtungen eingesetzt werden, um Gegenstände ohne vorangehende Sortierung aufzunehmen und zu transportieren, wie etwa End- oder Zwischenprodukte in einer Produktionsanlage.

Wo 85/04387 A1 offenbart einen Transportwagen zum Aufnehmen und Transportieren von Gegenständen.

### ALLGEMEINE BESCHREIBUNG EINIGER BEISPIELHAFTER AUSFÜHRUNGSFORMEN DER ERFINDUNG

Eine der Aufgaben der Erfindung besteht darin, eine Möglichkeit bereitzustellen, den Netto-Energieverbrauch einer Anlage zu reduzieren.

Die Aufgabe wird gelöst durch einen Transportwagen gemäß Anspruch 1, ein System gemäß Anspruch 7 und ein Verfahren gemäß Anspruch 11. Weitere Ausführungsformen sind den abhängigen Ansprüchen zu entnehmen.

Ein Ausführungsbeispiel eines erfindungsgemäßen Transportwagens umfasst die Merkmale des Anspruchs 1.

Ein Ausführungsbeispiel eines erfindungsgemäßen Systems umfasst die Merkmale des Anspruchs 7.

Ein Ausführungsbeispiel eines erfindungsgemäßen Verfahrens umfasst die Schritten des Anspruchs 11.

Die Erfindung basiert auf der Überlegung, dass Sorter in einer üblichen Sortieranlage Gegenstände auf einer gewissen Höhe befördern und ausgeben. Pakete, als beispielhafte Gegenstände, wiegen dabei im Durchschnitt 5 kg, und ein beispielhafter Sorter gibt pro Stunde 20.000 solcher Pakete aus. Die ausgegebenen Pakete weisen somit in Summe eine erhebliche potentielle Energie auf. Entsprechende Überlegungen gelten für Sortieranlagen, in denen andere Gegenstände sortiert werden, sowie für Anlagen, in denen Gegenstände zwar nicht sortiert, aber in größeren Mengen für einen Transport bereitgestellt werden.

Die Erfindung sieht daher für bestimmte beispielhafte Ausführungsformen vor, dass eine Vorrichtung zum Aufnehmen und Transportieren von Gegenständen einen Boden aufweist, dessen Höhe mittels eines Verstellmechanismus variabel einstellbar ist. Werden Gegenstände in die Vorrichtung gefüllt, so senkt sich der Boden unter der Last. Die potentielle Energie der Gegenstände wird dabei in mechanische Energie am Verstellmechanismus umgewandelt. Wird diese mechanische Energie, etwa über eine Kupplung, einem Generator zugeführt, so kann der Generator die mechanische Energie in elektrische Energie umwandeln und zur Verwendung bereitstellen.

Durch den verstellbaren Boden können Gegenstände beispielsweise automatisch in eine Vorrichtung zum Transportieren der Gegenstände verbracht werden, ohne dass hierzu menschliche Arbeit nötig wäre. Da die maximale Fallhöhe für die Gegenstände durch die Verstellung des Bodens limitiert werden kann, kann das Risiko von Beschädigungen minimiert werden. Mit einer automatischen Beladung von Vorrichtungen kann auch die Speicherfläche von Endstellen und damit der Flächenbedarf einer gesamten Anlage verkleinert werden. Der Transportwagen selber stellt die benötigte Pufferfunktion bereit. Hierdurch werden auch andere Formen der gesamten Anlage möglich. Wenn weiterhin eine Beladung der Vorrichtung durch Personal vorgesehen ist, wird die Arbeit des Personals erleichtert und das Risiko von Beschädigungen minimiert. Dieser Aspekt ist also auch für sich gesehen von Vorteil.

Durch die Umwandlung der beim Absenken des Bodens auftretenden mechanischen Energie in elektrische Energie kann die Energiebilanz einer Anlage, in der die Vorrichtung eingesetzt wird, verbessert werden. Die mechanische Energie wird dabei durch Umwandlung der potentiellen Energie der in die Vorrichtung geladenen Gegenstände bereitgestellt.

In einer beispielhaften Ausführungsform des Systems umfasst die Vorrichtung selber den Generator. In dem Fall kann das erfindungsgemäße System ausschließlich die Vorrichtung umfassen, optional aber auch weitere oder alle Komponenten einer gesamten Anlage.

In einer anderen beispielhaften Ausführungsform des Systems ist der Generator dagegen außerhalb der Vorrichtung angeordnet. Hierdurch können eine Gewichtserhöhung der Vorrichtung sowie bewegliche elektrische Betriebsmittel an der Vorrichtung vermieden werden. In dem Fall kann das erfindungsgemäße System ausschließlich die Vorrichtung und den externen Generator umfassen, optional aber auch wiederum weitere oder alle Komponenten einer gesamten Anlage.

In einer beispielhaften Ausführungsform des Systems umfasst das System mindestens ein Führungselement eingerichtet zum Führen der Vorrichtung an eine vorgegebene Position, an der der Verstellmechanismus mit einem externen Generator verbindbar ist. Zusätzlich oder alternativ umfasst das System in einer beispielhaften Ausführungsform mindestens ein Verbindungselement eingerichtet zum Fixieren der Vorrichtung an einer vorgegebenen Position, an der der Verstellmechanismus mit einem externen Generator verbindbar ist. Beides kann den Effekt haben, dass unerwünschte Belastungen der beweglichen Verbindung zwischen dem Verstellmechanismus und dem Generator minimiert werden.

In einer beispielhaften Ausführungsform des Systems wird die vom Generator bereitgestellte Energie in ein Stromnetz eingespeist. Dabei kann es sich beispielsweise um ein öffentliches Stromnetz oder um ein betriebsinternes Stromnetz handeln. Hierdurch steht die Energie für eine beliebige Nutzung zur Verfügung. Insbesondere wenn der Generator ein Teil der Vorrichtung ist, kann die von dem Generator bereitgestellte elektrische Energie aber auch unmittelbar genutzt werden, um einen Akkumulator oder einen Kondensator der Vorrichtung zu laden. Die gespeicherte elektrische Energie steht dann beispielsweise für Funktionen der Vorrichtung zur Verfügung.

In einer beispielhaften Ausführungsform des Systems weist der Generator eine Bremse auf, und der Generator ist derart mit dem Verstellmechanismus verbunden oder verbindbar, dass der Boden durch das Gewicht von aufgenommenen Gegenständen nur bei freigegebener Bremse absinkt. Dies kann den Vorteil bieten, dass der Boden schrittweise abgesenkt werden kann.

In einer beispielhaften Ausgestaltung dieser Ausführungsform umfasst das System ferner mindestens einen Sensor zum Überwachen der Höhe der aufgenommenen Gegenstände und eine Steuerschaltung. Die Steuerschaltung kann so eingerichtet sein, dass die Bremse in Abhängigkeit von einem Ausgangssignal des Sensors freigegeben wird. Dies kann den Vorteil bieten, dass der Boden der Vorrichtung beispielsweise gezielt immer gerade soweit abgesenkt werden kann, dass die Gegenstände beim Beladevorgang nicht aus der Vorrichtung herausfallen. Damit kann die Fallhöhe der Gegenstände in die Vorrichtung während des gesamten Beladevorgangs minimiert werden. Der mindestens eine Sensor kann beispielsweise ein Sensor für sichtbares oder nichtsichtbares Licht sein, das von einer entsprechenden Lichtquelle ausgesandt wird. Lichtquelle und Sensor können dann eine Lichtschranke bilden. Eine solche Lichtquelle kann ebenfalls Teil einer erfindungsgemäßen Ausführungsform eines Systems sein.

Ein Sensor kann Teil der Vorrichtung sein, oder außerhalb der Vorrichtung angebracht werden.

Wenn der mindestens eine Sensor an der Vorrichtung befestigt und der Generator außerhalb der Vorrichtung angeordnet ist, so kann das System in einer beispielhaften Ausführungsform ferner Kommunikationsmittel zum Übertragen eines auf einem Ausgangssignals des Sensors basierenden Signals an die Steuereinheit umfassen. Die Kommunikationsmittel können dabei für eine Kommunikation untereinander geeignete Komponenten an der Vorrichtung und außerhalb der Vorrichtung umfassen. Es kann sich dabei beispielsweise um Bluetooth-Module, Infrarotschnittstellen-Module oder um andere Module für eine funkbasierte Kommunikation handeln. Die Kommunikationsmittel könnten aber auch eine leitungsbasierte Kommunikation ermöglichen, wobei die hierzu nötige Verbindung zwischen Sensor und Steuereinheit hergestellt werden kann, wenn der Generator mit dem Verstellmechanismus verbunden wird.

In einer beispielhaften Ausführungsform des Systems umfasst das System ferner einen Motor, wobei der Motor derart mit dem Verstellmechanismus verbunden oder verbindbar ist, dass der Boden mittels des Motors angehoben werden kann. Das Vorsehen eines Motors kann den Vorteil bieten, dass der Boden nicht von Hand in eine höhere Position befördert werden muss. Der Motor braucht dabei nicht notwendigerweise als separates Bauteil vorgesehen werden. Es kann auch eine Wechselstrommaschine eingesetzt werden, die sowohl als Generator als auch als Motor betrieben werden kann.

In einer beispielhaften Ausführungsform des Systems ist der Boden der Boden eines Sacks. Der Verstellmechanismus kann dann Riemen zum Reffen des Sacks und Rollen zum Auf- und Abrollen der Riemen umfassen, wobei die Rollen mit dem Generator verbunden oder verbindbar sein können. Das Reffen des Sacks ist als eine Verkleinerung des Sackvolumens zu verstehen, die in beliebiger Weise realisiert werden kann. So könnten die Riemen beispielsweise nur mit dem Boden des Sacks verbunden sein, der beim Aufrollen der Riemen hochgezogen wird. Alternativ könnten die Riemen beispielsweise zusätzlich mit Ösen in die Seiten des Sacks eingearbeitet sein, so dass der Sack beim Aufrollen der Riemen seitlich gerafft wird. Durch die Nutzung eines Sacks zum Aufnehmen der Gegenstände kann die Vorrichtung besonders leicht ausgeführt werden. Ist zusätzlich ein Motor vorgesehen, so kann dieser für ein Anheben des Bodens ebenfalls mit den Rollen verbunden oder verbindbar sein.

Es versteht sich aber, dass anstelle von Rollen und Riemen auch andere mit einem Generator verbundene oder verbindbare Verstellmechanismen genutzt werden können. So könnte die Vorrichtung feste Seitenwände, etwa in Form eines Metallgitters, aufweisen, und ein Boden mittels eines Spindelantriebs hoch- und runtergefahren werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als zwingend notwendiger Bestandteil der vorliegenden Erfindung erachtet werden.

### KURZE BESCHREIBUNG DER ZEICHNUNGEN

In den Figuren zeigt:
- Fig. 1: eine schematische Darstellung einer beispielhaften Ausführungsform eines erfindungsgemäßen Systems;
- Fig. 2: eine schematische Darstellung einer Draufsicht auf das System aus Figur 1;
- Fig. 3: ein Blockdiagramm einer beispielhaften Ausführungsform eines erfindungsgemäßen Systems; und
- Fig. 4: ein Ablaufdiagramm mit Verfahrensschritten einer beispielhaften Ausführungsform des erfindungsgemäßen Verfahrens.

### DETAILLIERTE BESCHREIBUNG EINIGER BEISPIELHAFTER AUSFÜHRUNGSFORMEN DER ERFINDUNG

Die vorliegende Erfindung wird im Folgenden anhand von beispielhaften Ausführungsformen beschrieben, die eine Reduzierung des Energieverbrauchs in einer Anlage ermöglichen.

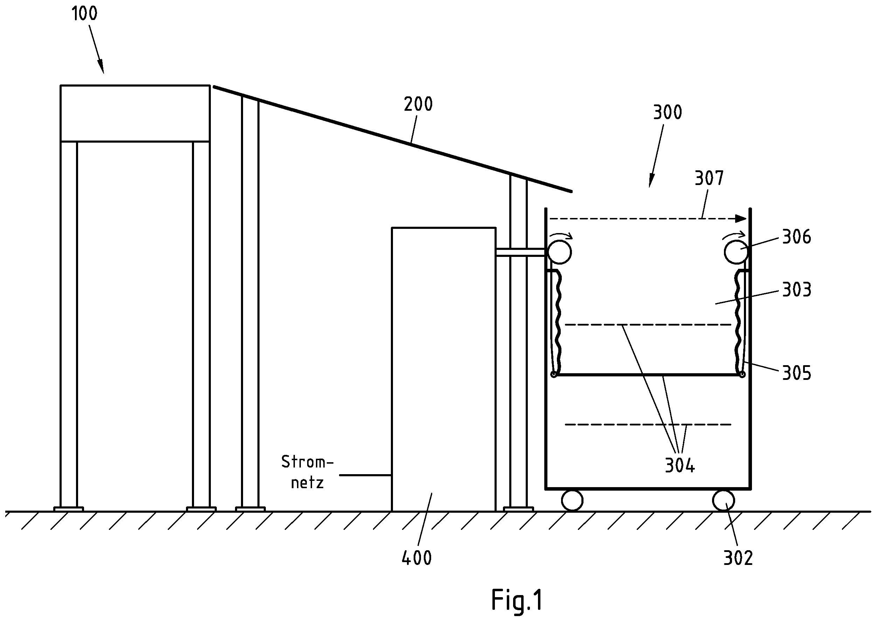

Figur 1 ist eine schematische Darstellung einer beispielhaften Ausführungsform eines erfindungsgemäßen Systems. Das System ist beispielhaft eine Paketsortieranlage.

Das System umfasst einen Sorter 10, beispielsweise einen Crossbelt- oder Kippschalensorter. Der Sorter 10 transportiert Pakete auf einer gewissen Höhe, bis sie an einer jeweiligen Endstelle ausgegeben werden. Endstellen sind an mehreren Stellen des Sorters 10 in Form einer Rutsche 20 vorgesehen.

Das System umfasst ferner mehrere Transportwagen. Ein Transportwagen 300 kann etwa ein Rollbehälter sein. Anders als ein Rollcontainer, der nach alten englischen Maßen dimensioniert ist, kann ein Rollbehälter Palettenmaß aufweisen. Ein Grundgestell 301 oder Transportrahmen des Transportwagens 300 begrenzt beispielsweise einen im Wesentlichen quaderförmigen Raum. Der obere Rand des Transportwagens 300 ist etwas niedriger als das untere Ende einer Rutsche 200.

Der Transportwagen 300 weist Räder 302 auf, um ein leichtes Schieben oder Ziehen des Transportwagens 300 zu ermöglichen.

Innerhalb des Grundgestells 301 des Transportwagens 300 ist ein Sack 303 montiert. Der Sack besteht aus einem textilen oder einem anderen flexiblen Material. Durch die Nutzung eines Sacks 303 sind die Anforderungen an die Seitenwände deutlich geringer als bei einem herkömmlichen Rollcontainer. Der Boden 304 des Sacks 303 ist höhenverstellbar; zwei gestrichelte Linien in Figur 1 deuten alternative Höhen zu einer beispielhaften aktuellen Höhe an. Der Boden 304 selber kann aus dem gleichen Material wie der Sack 303 bestehen. In dem Fall kann der Boden 304 ähnlich zu einem Fischernetz über eine ringlochförmige Öffnung verfügen, die gefahrlos auch von Hand unter Last geöffnet werden kann. Für Anwendungen, bei denen ein Entleeren des Sacks 303 nach unten möglich ist, kann dies die Handhabung erleichtern. Alternativ oder zusätzlich kann der Boden 304 aus einem steifen Material, etwa in Form eines Bretts, bestehen. Der Transportwagen 300 weist für die Verstellbarkeit des Bodens 304 seitlich am Sack 303 angebrachte Riemen 305 auf, sowie im oberen Bereich des Transportwagens 300 angeordnete Rollen 306, auf die die Riemen 305 aufgewickelt werden können. Es kann eine beliebige Anzahl an Riemen 305 und zugehörigen Rollen 306 vorgesehen werden, beispielsweise ein Riemen 305 an jeder Seite des Sacks entlang den vier vertikalen Kanten des Grundgerüsts 301 des Transportwagens 300, und eine Rolle 306 an jeder Ecke im oberen Bereich des Transportwagens 300. Mindestens eine der Rollen 306 ist mit mindestens einer Kupplung (nicht dargestellt) verbunden oder verbindbar.

Das System weist ferner eine Einrichtung 400 mit einer Wechselstrommaschine auf, die unter der Rutsche 200 oder unter dem Sorter 100 angeordnet sein kann. Die Wechselstrommaschine kann als Motor oder als Generator betrieben werden. Alternativ könnte die Einrichtung 400 auch einen Motor und einen Generator als separate Einheiten aufweisen, oder nur einen Generator. Die Wechselstrommaschine ist zum einen mit einem Stromnetz verbunden. Zum anderen ist die Wechselstrommaschine, beispielsweise über ein Getriebe, mit der mindestens einen Kupplung verbunden oder verbindbar. Die mindestens eine Kupplung selber kann also Teil des Transportwagens 300 oder der Einrichtung 400 sein.

Das System weist ferner eine Lichtquelle (nicht dargestellt) und einen Lichtsensor (nicht dargestellt) auf, die zusammen eine Lichtschranke 307 bilden können. Die Lichtquelle kann beispielsweise eine Leuchtdiode sein, aber ebenso eine beliebige andere Lichtquelle. Der Lichtsensor kann beispielsweise ein Fototransistor sein, aber ebenso ein beliebiger anderer Lichtsensor. Lichtquelle und Lichtsensor sind so angeordnet, dass ein Lichtsignal der Lichtquelle von dem Lichtsensor erfasst werden kann, solange Pakete in einem an der Rutsche 200 stehenden Transportwagen 300 nicht bis knapp unterhalb des oberen Randes des Transportwagens 300 reichen. Der Lichtsensor ist mit einer Steuereinheit für die Wechselstrommaschine verbunden.

Das System kann optional beliebige andere, hier nicht dargestellte Komponenten aufweisen.

So kann das System Führungselemente aufweisen, mit denen ein Transportwagen geführt genau so unter eine Rutsche 200 gefahren werden kann, dass sich die Rollen 306 des Transportwagens 300 über die Kupplung mit der Wechselstrommaschine der Einrichtung 400 verbinden.

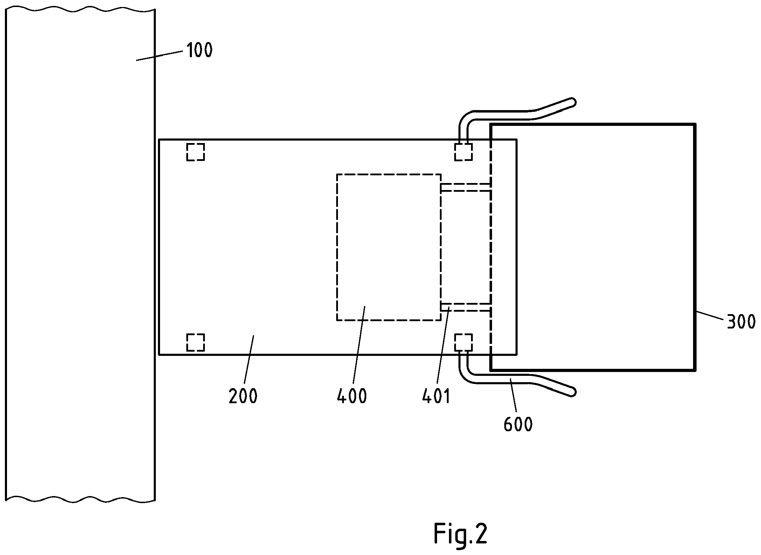

Figur 2 ist eine schematische Darstellung einer Draufsicht auf das System aus Figur 1, in der beispielhafte Führungselemente dargestellt sind. Auf einer beliebigen Höhe zwischen dem Boden und dem unteren Ende einer Rutsche 200 ist eine Stange 600 auf jeder Seite der Rutsche 200 angebracht. Die Stangen 600 dienen als Führungselemente für einen Transportwagen 300. Wird ein Transportwagen 300 an das untere der Rutsche 200 geschoben, so wird sichergestellt, dass Kupplungen am Transportwagen 300 mit Gestänge 401 der Einrichtung 400 verbunden werden, bzw. dass Verbindungselementen für Kupplungen am Transportwagen 300 mit Kupplungen an der Einrichtung 400 verbunden werden.

Eine Lichtquelle und ein Lichtsensor könnten beispielsweise an gegenüberliegenden Führungselementen angeordnet sein. Eine Lichtquelle und ein Lichtsensor könnten beispielsweise auch nebeneinander angeordnet sein, während ein Reflektor gegenüberliegend angeordnet ist. So könnten eine Lichtquelle und ein Lichtsensor etwa an einem Führungselement und ein Reflektor an einem gegenüberliegenden Führungselement angeordnet sein; oder eine Lichtquelle und ein Lichtsensor könnten unter einer Rutsche 200 und ein Reflektor am oberen Rand jedes Transportwagens 300 angeordnet sein. Eine Lichtquelle und ein Lichtsensor könnten alternativ beide an einem oberen Rand eines jeden Transportwagens angeordnet sein. Weiter alternativ könnte eine Komponente an den Transportwagen 300 und eine andere Komponente außerhalb des Transportwagens 300 angeordnet sein. Sind Lichtquelle und Lichtsensor außerhalb des Transportwagens 300 angeordnet, so kann dies den Vorteil haben, dass für die Lichtschranke keine Stromversorgung in dem Transportwagen 300 erforderlich ist und keine Kommunikationseinheit zum Übermitteln des Messergebnisses des Lichtsensors an die Steuereinheit für die Wechselstrommaschine. Außerdem sind weniger Lichtquellen und/oder Lichtsensoren erforderlich, da die gleichen Lichtquellen und/oder Lichtsensoren für eine Vielzahl von Transportwagen 300 genutzt werden können, und Lichtquellen und/oder Lichtsensoren können beim Beladen weniger leicht beschädigt werden. Das Unterbringen von Lichtquellen und/oder Lichtsensoren an einem Transportwagen kann es dagegen leichter machen, den gewünschten Bereich zu überwachen.

Das System kann ferner Verbindungselemente (nicht dargestellt) aufweisen, mit denen ein Transportwagen 300 mit einem feststehenden Bauteil verbunden werden kann. Jedes Verbindungselement kann einen ersten Teil an einem Transportwagen 300 und ein an einer festen Position installiertes komplementäres Teil vorsehen. Allerdings könnten auch nur Verbindungselemente an einer festen Position installiert sein, beispielsweise in Form eines Fügeteils einer Schnappverbindung, das dann beispielsweise mit einem ohne besondere Anpassung ausgeführten Grundgestell 301 eines Transportwagens 300 interagieren. Solche Verbindungselemente können auch mit der Kupplung kombiniert werden.

Der Transportwagen 300 ist eine beispielhafte Ausführungsform einer erfindungsgemäßen Vorrichtung.

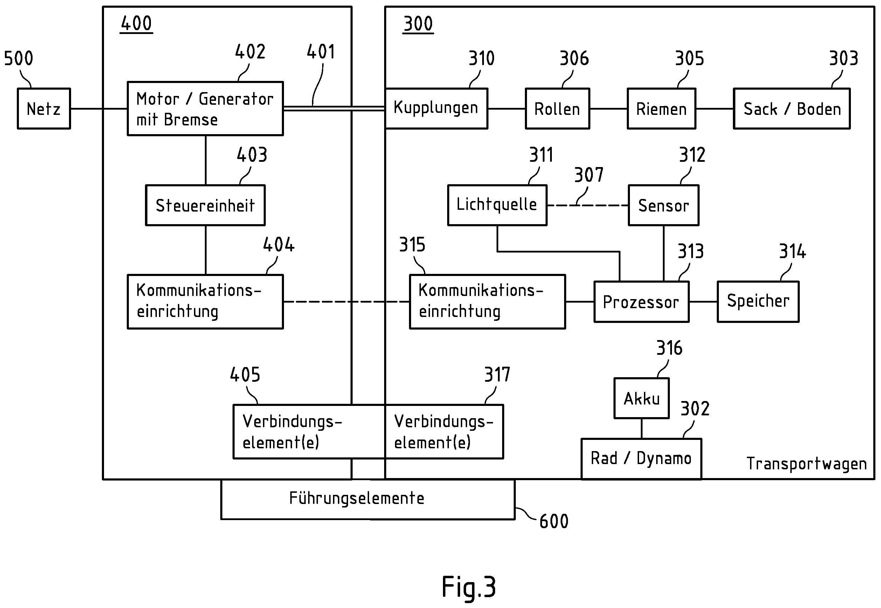

In Figur 3 sind ausgewählte Komponenten des Systems aus Figur 1 in einem Blockdiagramm dargestellt, insbesondere Komponenten des Transportwagens 300 und der Einrichtung 400.

Der Transportwagen 300 umfasst einen Sack 303 zum Aufnehmen von Paketen, mit dem Sack 303 verbundene Riemen 305 und Rollen 306 zum Auf- und Abrollen der Riemen 305. Die Rollen 306 sind mit Kupplungen 310 verbunden, die hier beispielhaft als Teil des Transportwagens 300 dargestellt sind. Es kann beispielsweise jeweils für ein Paar von hintereinander auf einer Achse angeordneten Rollen 306 eine eigene Kupplung 310 vorgesehen sein. Der Transportwagen 300 umfasst ferner eine Lichtquelle 311 und einen Lichtsensor 312 zum Bereitstellen einer Lichtschranke 307. Der Transportwagen 300 umfasst ferner einen Prozessor 313, der mit der Lichtquelle 311, dem Lichtsensor 312, einem Speicher 314 des Transportwagens 300 und einer Kommunikationseinrichtung 315 des Transportwagens 300 verbunden ist. Der Speicher 314 kann Programmanweisungen für den Prozessor 313, Daten zu dem Transportwagen 300, Daten zu geladenen Paketen und/oder andere Informationen speichern. Der Prozessor 313 kann im Speicher 314 gespeicherte Programmanweisungen ausführen und damit bestimmte, vorgesehene Aktionen veranlassen. Die Kommunikationseinrichtung 315 kann beispielsweise mindestens eine Art einer drahtlosen Kommunikation ermöglichen. Sie kann etwa ein Bluetooth-Modul, ein Infrarotschnittstellen-Modul und/oder einen Transponder umfassen.

Der Prozessor 313 kann beispielsweise ein Mikroprozessor sein. Der Prozessor 313 kann mit weiteren, nicht dargestellten Komponenten des Transportwagens 300 verbunden sein, wie mit einer USB-Schnittstelle, einem Display, usw. Unter Einsatz des Prozessors 313 und der Kommunikationsmittel 315 kann der Transportwagen 300 als teilautonomes System im logistischen Umfeld agieren.

Der Transportwagen 300 weist außerdem vier Räder 302 auf. Mindestens eines der Räder 302 könnte einen Dynamo aufweisen, der Energie für einen Akkumulator 316 oder für Kondensatoren des Transportwagens 300 bereitstellt. Alternativ könnte ein solcher Akkumulator 316 aber auch über eine andere Quelle im Transportwagen 300 oder außerhalb des Transportwagens 300 regelmäßig geladen werden. Lichtquelle 311, Lichtsensor 312, Prozessor 313 und Kommunikationseinrichtung 315 werden von dem Akkumulator 316 mit Energie versorgt. Bei Bedarf kann die Energie aus dem Akkumulator 316 auch für diverse andere Funktionen des Transportwagens 300 genutzt werden. Der Akkumulator 316, der Prozessor 313, der Speicher 314 und die Kommunikationseinrichtung 315 könnten im Transportwagen 300 beispielsweise oberhalb der Räder 302 und unterhalb der untersten Position des Bodens 304 angeordnet sein.

Der Transportwagen 300 weist außerdem beispielhaft mindestens ein Verbindungselement 317 auf. Ein Verbindungselement 317 kann als Einheit mit einer Kupplung 310 oder separat ausgebildet sein. Sind Verbindungselemente 317 auf jeder Seite eines Transportwagens 300 angebracht, so können sie auch dazu verwendet werden, um mehrere Transportwagen 300 hintereinander und nebeneinander miteinander zu verbinden. Hierdurch kann eine Gruppe von Transportwagen 300 besonders einfach von einer Laderampe in den Laderaum eines Lastkraftwagens oder in einen Wechselbehälter oder Sattelauflieger für einen Lastkraftwagen verbracht werden.

Ein Verbindungselement 317 eines Transportwagens 300 könnte auch als Deichsel ausgebildet sein, so dass mehrere Transportwagen 300 über die Deichsel(n) zu einem Zug verkettet werden können und mittels einer form- und kraftschlüssigen Verbindung mechanisch ein Gebilde darstellen.

Die Einrichtung 400 umfasst einen Motor und einen Generator mit Bremse 402. Motor und Generator 402 können dabei optional die gleiche Maschine in unterschiedlichen Betriebsmodi sein. Motor und Generator 402 sind mit einem Stromnetz 500 des Systems verbunden. Eine Steuereinheit 403 der Einrichtung 400 ist mit Motor und Generator 402 sowie mit einer Kommunikationseinrichtung 404 der Einrichtung 400 verbunden. Die Kommunikationseinrichtung 404 ist so ausgebildet, dass sie mit der Kommunikationseinrichtung 315 einer jeweiligen Vorrichtung 300 kommunizieren kann. Die Einrichtung 400 umfasst außerdem ein Gestänge 401 zum Verbinden von Motor und Generator 402 mit der mindestens einen Kupplung 300 eines jeweiligen Transportwagens 300. Die Einrichtung 400 umfasst mindestens ein Verbindungselement 405, das zu dem mindestens einen Verbindungselement 317 eines jeweiligen Transportwagens 300 komplementär ist.

Das System umfasst ferner Führungselemente 600, die in stabiler Weise mit der Einrichtung 400 oder mit anderen stabilen Elementen des Systems verbunden sein können, beispielsweise mit Tragestangen für die Rutsche 200 wie in Figur 2 angedeutet, oder gegebenenfalls auch direkt mit dem Boden.

Das System aus Figuren 1 bis 3 kann in vielfältiger Weise abgewandelt werden, sowohl durch das Weglassen von Komponenten wie auch durch das Hinzufügen von Komponenten. Hierdurch können sich weitere oder alternative Vorteile ergeben.

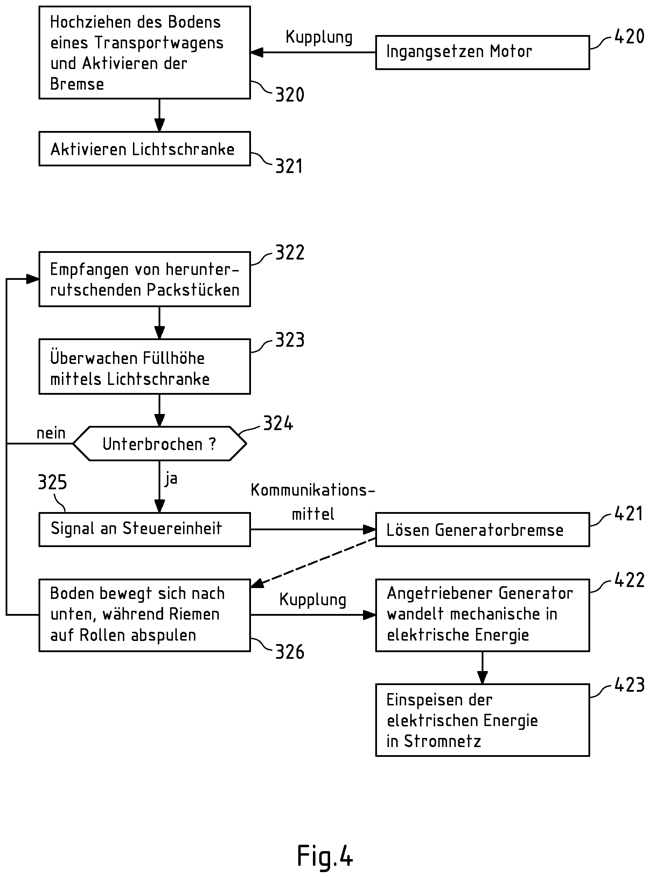

Figur 4 ist ein Ablaufdiagramm, das eine Operation in dem System aus den Figuren 1 bis 3 gemäß einem beispielhaften Ausführungsbeispiel eines erfindungsgemäßen Verfahrens illustriert. Die linke Seite zeigt Operationen an einem Transportwagen 300 und die rechte Seite Operationen an der Einrichtung 400.

Ein Transportwagen 300 soll mit Paketen gefüllt werden, die an einer bestimmten Rutsche 200 ausgegeben werden. Wenn eine Person den Transportwagen 300 - geführt von den Führungselementen 600 - unter die Rutsche 200 fährt, so greift das Gestänge 401 der Einrichtung 400 in die Kupplungen 310 des Transportwagens 300 ein. Komplementäre Verbindungselemente 317, 405 an Transportwagen 300 und Einrichtung 400 sorgen für eine starre Verbindung, damit die Verbindung zwischen dem Motor bzw. Generator 402 und den Rollen 306 über die Kupplungen 310 beim Herstellen dieser Verbindung, beim Lösen dieser Verbindung und beim Beladen des Transportwagens 300 möglichst wenig in horizontale und vertikale Richtungen belastet wird.

Wenn der Transportwagen 300 die endgültige Beladeposition an der Rutsche 200 eingenommen hat, wird der Motor 402 durch die Steuereinheit 403 in Gang gesetzt. (Aktion 420) Dies kann beispielsweise über einen mit der Steuereinheit 403 verbundenen Schalter erfolgen, der automatisch betätigt wird, wenn der Transportwagen 300 mit der Einrichtung 400 verbunden wird. Alternativ kann das Ingangsetzen des Motors 402 beispielsweise durch eine Person initiiert werden. Die Energieversorgung für den Motor 402 wird von dem Stromnetz 500 zur Verfügung gestellt. Der Motor 402 dreht die Rollen 306 über die Kupplungen 310 so, dass die Riemen 305 aufgewickelt und die Seiten des Sacks 303 gerafft werden, wodurch der Boden 304 des Sacks 303 nach oben gezogen wird. (Aktion 320) Erhöht sich die Last am Motor 402, weil die Riemen 305 im Wesentlichen so weit wie möglich aufgerollt sind, so wird der Motor 402 durch die Steuereinheit 403 automatisch ausgeschaltet. Außerdem veranlasst die Steuereinheit 403 dann das Aktivieren der Bremse.

Es versteht sich, dass das Anheben des Bodens 304 alternativ während eines Ausladens des Transportwagens 300 erfolgen könnte, um das Ausladen zu erleichtern. In dem Fall braucht die Einrichtung 400 auch keinen Motor aufzuweisen, da der Transportwagen 300 dann bereits mit hochgezogenem Boden 304 unter die Rutsche 200 gefahren wird.

Sobald der Transportwagen 300 an der richtigen Position ist oder sobald der Boden 304 an seiner obersten Position angelangt ist, wird außerdem die Lichtquelle 311 eingeschaltet und der Sensor 312 aktiviert. (Aktion 321) Der Sensor 312 erfasst einen Lichtstrahl von der Lichtquelle 311.

Der Transportwagen 300 empfängt die an der Rutsche 200 herunterrutschenden Pakete. (Aktion 322) Da sich der hochgezogene Boden 304 des Transportwagens 300 relativ nah unter der unteren Kante der Rutsche 200 befindet, fallen die Pakete nicht tief und werden damit relativ sanft in den Transportwagen 300 befördert.

Gleichzeitig wird die Füllhöhe mittels einer Lichtschranke 307 überwacht. (Aktion 323) Sobald der Lichtsensor 312 feststellt, dass der Lichtstrahl von der Lichtquelle 311 nicht mehr erfasst wird, die Lichtschranke 307 also unterbrochen wurde (Aktion 324), übermittelt der Sensor 312 eine entsprechende Information an den Prozessor 313. Der Prozessor 313 veranlasst daraufhin die Kommunikationseinrichtung 315, die Einrichtung 400 mittels eines vorgegebenen Signals zu benachrichtigen. (Aktion 325)

Die Kommunikationseinrichtung 404 der Einrichtung 400 empfängt das Signal und gibt es an die Steuereinheit 403 weiter. Die Steuereinheit 403 gibt nun die Bremse des Generators 402 für eine vorgegebene Zahl von Umdrehungen frei. (Aktion 421)

Bis zu diesem Zeitpunkt hatte die Bremse dafür gesorgt, dass der Generator 402 nicht angetrieben werden konnte. Damit waren über das Gestänge 401 und die Kupplungen 310 auch die Rollen 306 blockiert. So konnte verhindert werden, dass sich die Riemen 305 aufgrund des Gewichts der ersten eingeladenen Pakete vollständig abrollen, so dass der Sackboden 304 seine unterste Position einnimmt und nachfolgende Pakete unsanft über eine größere Höhe in den Transportwagen 300 fallen.

Mit der freigegebenen Bremse können sich die Rollen 306 nun drehen. Aufgrund des Gewichts der soweit geladenen Pakete im Sack 303 bewegt sich der Boden 304 des Sacks 303 ein Stück nach unten, während die Riemen 305 abgerollt werden. (Aktion 326)

Die sich dabei drehenden Rollen 305 übertragen die mechanische Energie über die Kupplungen 310 und das Gestänge 401 an den Generator 402. Der angetriebene Generator 402 wandelt die mechanische Energie in elektrische Energie um. (Aktion 422)

Die elektrische Energie wird in das Stromnetz 500 eingespeist. (Aktion 423)

Nach der vorgegebenen Anzahl von Umdrehungen des Generators 402 wird die Bremse wieder aktiviert. Mit der Absenkung des Bodens 304 des Sacks 303 wurden auch die bereits geladenen Pakete abgesenkt, so dass die Lichtschranke 307 wieder freigegeben ist. Das Verfahren (Aktion 322-326 und 421-423) wird fortgeführt, bis der Boden 304 des Sacks 303 die unterste Position erreicht hat. In dem Fall kann dann eine Person den Transportwagen 300 austauschen.

In dem vorgestellten System können Pakete somit relativ sanft automatisch in einen Transportwagen 300 verbracht werden, indem der Boden 304 der Transportwagens 300 bei der Beladung in mehreren Stufen unter Ausnutzung der potentiellen Energie der bereits geladenen Pakete abgesenkt wird, während die bei der Absenkung auftretende mechanische Energie in elektrische Energie umgewandelt und für eine Weiterverwendung bereitgestellt wird.

Es versteht sich, dass das Verfahren in vielerlei Hinsicht abgewandelt werden kann.

Beispielsweise entsteht bei einer vollautomatischen Beladung eines Transportwagens 300 während der Beladung eine Anordnung der Pakete mit großen dazwischen liegenden Freiräumen, ähnlich zu Poren im Gestein. Durch gezieltes Auf- und Abbewegen des Bodens im Transportwagen kann diese Anordnung gestört werden. Dadurch kommt es zu Setzbewegungen und die Beladungsdichte des Transportwagens 300 wird optimiert.

Transportwagen 300 können, abhängig vom betrieblichen Geschehen, eine oder mehrere Endstellen auch mehrfach anfahren.

Die Kommunikationseinrichtung 315 eines Transportwagens 300 könnte zusätzlich dazu genutzt werden, um einer Endstelle oder einer beliebigen Kontrollstation eine Identifizierung des Transportwagens 300 über einen RFID (radio-frequency identification) Transponder der Kommunikationseinrichtung 315 zur Verfügung zu stellen. Eine Identifizierung des Transportwagens 300 kann aber auch mittels eines Barcodes erfolgen. Die Kommunikationseinrichtung 315 eines Transportwagens 300 könnte auch dazu genutzt werden, um Informationen über geladene Pakete, wie beispielsweise eine Zielinformation oder den Füllstand, zu empfangen. Informationen über geladene Pakete können beispielsweise von der Kommunikationseinrichtung 404 oder von einer weiteren Kommunikationseinrichtung der Endstelle bereitgestellt werden. Erhaltene Informationen können beispielsweise von dem Prozessor 313 im Speicher 314 gespeichert werden. An anderen Stellen können die Informationen ausgelesen werden, oder die Informationen können zwischen Transportwagen 300 ausgetauscht werden. In einem Transportwagen 300 gespeicherte Informationen können als Basis für Entscheidungen und/oder im Rahmen von Qualitätskontrollen genutzt werden.

Die dargestellten oder beschriebenen Verbindungen zwischen Komponenten sind als funktionale Verbindungen zu verstehen. Sie können direkt oder indirekt über mehrere andere Komponenten realisiert werden. Die Abfolge der geschilderten Aktionen in dem Ablaufdiagramm ist nicht zwingend; alternative Abfolgen der Verfahrensschritte sind denkbar. Die Aktionen können auf verschiedene Art und Weise implementiert werden.

Es versteht sich, dass die beschriebenen Ausführungsformen lediglich Beispiele sind, die im Rahmen der Ansprüche auf vielfältige Weise modifiziert und/oder ergänzt werden können. Insbesondere kann jedes Merkmal, das für ein bestimmtes Ausführungsbeispiel beschrieben wurde, eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

## Patentansprüche

1. Transportwagen (300) zum Aufnehmen und Transportieren von Gegenständen umfassend einen Sack (303) für eine Befüllung mit Gegenständen und einen Verstellmechanismus (305, 306), wobei
- der Sack (303) einen mittels des Verstellmechanismus (305, 306) höhenverstellbaren Boden (304) aufweist,
- der Verstellmechanismus Riemen (305) zum Reffen des Sacks (303) und Rollen (306) zum Auf- und Abrollen der Riemen (305) umfasst,
- die Riemen (305) und Rollen (306) derart eingerichtet sind, dass der Boden (304) durch ein Gewicht von aufgenommenen Gegenständen absenkbar ist, und
- mindestens eine der Rollen (306) derart mit dem Generator (402) verbindbar oder verbunden ist, dass der Generator (402) bei absinkendem Boden (304) angetrieben wird und mechanische in elektrische Energie umwandelt.

2. Transportwagen (300) gemäß Anspruch 1, wobei der Generator (402) außerhalb des Transportwagens (300) angeordnet ist und wobei der Transportwagen (300) ferner mindestens ein Verbindungselement (317) eingerichtet zum Fixieren des Transportwagens (300) an einer vorgegebenen Position, an der die mindestens eine Rolle (306) mit dem Generator (402) verbindbar ist, umfasst.

3. Transportwagen gemäß Anspruch 1, ferner umfassend den Generator, wobei der Generator mechanische in elektrische Energie umwandelt und die elektrische Energie bereitstellt, indem er die Energie in ein Stromnetz einspeist.

4. Transportwagen (300) gemäß einem der Ansprüche 1 bis 3, wobei der Generator (402) eine Bremse aufweist und wobei der Generator (402) derart mit der mindestens einen Rolle (306) verbunden oder verbindbar ist, dass der Boden (304) durch das Gewicht von aufgenommenen Gegenständen nur bei freigegebener Bremse absinkt.

5. Transportwagen gemäß Anspruch 4, ferner umfassend mindestens einen Sensor zum Überwachen einer Höhe der aufgenommenen Gegenstände, wobei
- der Transportwagen ferner eine Steuereinheit umfasst, die eingerichtet ist, die Bremse in Abhängigkeit von einem Ausgangssignal des Sensors freizugeben, oder
- der Generator (402) außerhalb des Transportwagens (300) angeordnet ist und der Transportwagen (300) ferner Kommunikationsmittel (315) zum Übertragen eines auf einem Ausgangssignals des Sensors (312) basierenden Signals an eine Steuereinheit (403), die eingerichtet ist, die Bremse in Abhängigkeit von einem Ausgangssignal des Sensors (312) freizugeben, umfasst.

6. Transportwagen gemäß einem der Ansprüche 1 bis 5, ferner umfassend einen Motor, wobei der Motor derart mit dem Verstellmechanismus verbunden ist, dass der Boden mittels des Motors angehoben werden kann.

7. System umfassend den Transportwagen (300) gemäß einem der Ansprüche 1 bis 6 und den Generator (402), wobei der Generator von dem Transportwagen umfasst ist oder außerhalb des Transportwagens angeordnet ist.

8. System gemäß Anspruch 7, wobei der Generator (402) außerhalb des Transportwagens (300) angeordnet ist, das System ferner umfassend
- mindestens ein Führungselement (600) eingerichtet zum Führen des Transportwagens (300) an eine vorgegebene Position, an der die mindestens eine Rolle (306) mit dem Generator (402) verbindbar ist; und/oder
- mindestens ein außerhalb des Transportwagens (300) angeordnetes Verbindungselement (405) eingerichtet zum Fixieren des Transportwagens (300) an einer vorgegebenen Position, an der die mindestens eine Rolle (306) mit dem Generator (402) verbindbar ist.

9. System gemäß einem der Ansprüche 7 und 8, wobei der Generator (402) außerhalb des Transportwagens (300) angeordnet ist, und wobei der Generator (402) die elektrische Energie bereitstellt, indem er die Energie in ein Stromnetz (500) einspeist.

10. System gemäß einem der Ansprüche 7 bis 9, wobei der Generator (402) eine Bremse aufweist und wobei der Generator (402) derart mit der mindestens einen Rolle (306) verbunden oder verbindbar ist, dass der Boden (304) durch das Gewicht von aufgenommenen Gegenständen nur bei freigegebener Bremse absinkt, ferner umfassend mindestens einen Sensor (312) zum Überwachen einer Höhe der aufgenommenen Gegenstände und eine Steuereinheit (403), wobei die Steuereinheit (403) eingerichtet ist, die Bremse in Abhängigkeit von einem Ausgangssignal des Sensors (312) freizugeben.

11. Verfahren umfassend:
- Übertragen einer an einem Verstellmechanismus (305, 306) eines Transportwagens (300) zum Aufnehmen und Transportieren von Gegenständen auftretenden mechanischen Energie zu einem Generator (400), wobei der Transportwagen (300) einen Sack (303) für eine Befüllung mit Gegenständen und der Verstellmechanismus Riemen (305) zum Reffen des Sacks (303) und Rollen (306) zum Auf- und Abrollen der Riemen (305) umfasst, wenn ein mittels des Verstellmechanismus (305, 306) höhenverstellbarer Boden (304) des Sacks (300) aufgrund eines Gewichts von aufgenommenen Gegenständen absinkt, wobei mindestens eine der Rollen (306) derart mit dem Generator (402) verbunden ist, dass der Generator (402) bei absinkendem Boden (304) angetrieben wird; und
- Umwandeln der mechanischen Energie in elektrische Energie durch den Generator (400).

12. Verfahren gemäß Anspruch 11, wobei der Generator (402) außerhalb des Transportwagens (300) angeordnet ist, ferner umfassend
- Führen des Transportwagens (300) an eine vorgegebene Position, an der die mindestens eine Rolle (306) dem Generator (402) verbindbar ist, mittels mindestens eines Führungselements (600); und/oder
- Fixieren des Transportwagens (300) an einer vorgegebenen Position, an der die mindestens eine Rolle (306) mit dem Generator (402) verbindbar ist, mittels mindestens eines Verbindungselements (317, 405).

13. Verfahren gemäß einem der Ansprüche 11 und 12, wobei der Generator (402) eine Bremse aufweist und wobei der Generator (402) derart mit der mindestens einen Rolle (306) verbunden oder verbindbar ist, dass der Boden (304) durch das Gewicht von aufgenommenen Gegenständen nur bei freigegebener Bremse absinkt.

14. Verfahren gemäß Anspruch 13, ferner umfassend
- ein Überwachen einer Höhe der aufgenommenen Gegenstände mittels mindestens eines Sensors (312) und ein Freigeben der Bremse mittels einer Steuereinheit (403) in Abhängigkeit von einem Ausgangssignal des Sensors (312) oder
- ein Überwachen einer Höhe der aufgenommenen Gegenstände mittels mindestens eines Sensors (312) und ein Freigeben der Bremse mittels einer Steuereinheit (403) in Abhängigkeit von einem Ausgangssignal des Sensors (312), wobei der mindestens eine Sensor (312) an dem Transportwagen (300) befestigt ist und der Generator (402) außerhalb des Transportwagens (300) angeordnet ist, und wobei das Verfahren ein Übertragen eines auf einem Ausgangssignals des Sensors (312) basierenden Signals an die Steuereinheit (403) umfasst.

15. Verfahren gemäß einem der Ansprüche 11 bis 14, wobei die aufgenommenen Gegenstände in einer Anlage bereitgestellte Gegenstände sind und wobei das Verfahren ein automatisches Befüllen des Transportwagens (300) mit den in der Anlage ausgegebenen Gegenständen umfasst.

## Claims

1. A transport carriage (300) for receiving and transporting objects comprising a bag (303) for being filled with objects and an adjusting mechanism (305, 306), wherein
- the bag (303) has a base (304) that can be adjusted in height by means of the adjusting mechanism (305, 306),
- the adjusting mechanism comprises straps (305) for gathering the bag (303) and rollers (306) for rolling up and unrolling the straps (305),
- the straps (305) and the rollers (306) are designed in such a way that the base (304) can be lowered by a weight of objects received, and
- at least one of the rollers (306) is connectable or connected to the generator (402) in such a way that the generator (402) is driven and converts mechanical energy into electrical energy while the base (304) is being lowered.

2. The transport carriage (300) according to claim 1, wherein the generator (402) is arranged outside the transport carriage (300) and wherein the transport carriage (300) further comprises at least one connecting element (317) designed for fixing the transport carriage (300) at a prescribed position, at which the at least one roller (306) can be connected to the generator (402).

3. The transport carriage according to claim 1, further comprising the generator, the generator converting mechanical energy into electrical energy and providing the electrical energy in that it feeds the energy into a power supply system.

4. The transport carriage (300) according to one of claims 1 to 3, wherein the generator (402) has a brake and the generator (402) is connected or is able to be connected to the at least one roller (306) in such a way that the base (304) is only lowered by the weight of objects received when the brake is released.

5. The transport carriage according to claim 4, further comprising at least one sensor for monitoring a height of the objects received, wherein
- the transport carriage further comprises a control unit, the control unit being designed to release the brake in dependence on an output signal of the sensor; or
- the generator (402) is arranged outside the transport carriage (300) and the transport carriage (300) further comprises communication means (315) for transmitting a signal based on an output signal of the sensor (312) to a control unit (403), which is designed to release the brake in dependence on an output signal of the sensor (312).

6. The transport carriage according to one of claims 1 to 5, further comprising a motor, wherein the motor is connected to the adjusting mechanism in such a way that the base can be raised by means of the motor.

7. A system comprising the transport carriage (300) according to any of claims 1 to 6 and the generator (402), wherein the generator is comprised by the transport carriage or arranged outside the transport carriage (300).

8. The system according to claim 7, wherein the generator (402) is arranged outside the transport carriage (300), the system further comprising
- at least one guiding element (600) designed for guiding the transport carriage (300) to a prescribed position, at which the at least one roller (306) can be connected to the generator (402); and/or
- at least one connecting element (405) arranged outside the transport carriage (300) and designed for fixing the transport carriage (300) at a prescribed position, at which the at least one roller (306) can be connected to the generator (402).

9. The system according to one of claims 7 and 8, wherein the generator (402) is arranged outside the transport carriage (300) and wherein the generator (402) provides the electrical energy in that it feeds the energy into a power supply system (500).

10. The system according to one of claims 7 to 9, wherein the generator (402) has a brake and the generator (402) is connected or is able to be connected to the at least one roller (306) in such a way that the base (304) is only lowered by the weight of objects received when the brake is released, further comprising at least one sensor (312) for monitoring a height of the objects received and a control unit (403), the control unit (403) being designed to release the brake in dependence on an output signal of the sensor (312).

11. A method comprising:
- transferring a mechanical energy occurring at an adjusting mechanism (305, 306) of a transport carriage (300) for receiving and transporting objects to a generator (400), the transport carriage (300) comprising a bag (303) for being filled with objects and the adjusting mechanism comprising straps (305) for gathering the bag (303) and rollers (306) for rolling up and unrolling the straps (305), when a base (304) of the bag (300) that can be adjusted in height by means of the adjusting mechanism (305, 306) is being lowered as a result of a weight of objects received, wherein at least one of the rollers (306) is connected to the generator (402) in such a way that the generator (402) is driven while the base (304) is being lowered; and
- converting the mechanical energy into electrical energy by the generator (400).

12. The method according to claim 11, wherein the generator (402) is arranged outside the transport carriage (300), the method further comprising
- guiding the transport carriage (300) to a prescribed position, at which the at least one roller (306) can be connected to the generator (402), by means of at least one guiding element (600); and/or
- fixing the transport carriage (300) at a prescribed position, at which the at least one roller (306) can be connected to the generator (402), by means of at least one connecting element (317, 405).

13. The method according to one of claims 11 and 12, wherein the generator (402) has a brake and the generator (402) is connected or is able to be connected to the at least one roller (306) in such a way that the base (304) is only lowered by the weight of objects received when the brake is released.

14. The method according to claim 13, further comprising
- monitoring a height of the objects received by means of at least one sensor (312) and releasing the brake by means of a control unit (403) in dependence on an output signal of the sensor (312); or
- monitoring a height of the objects received by means of at least one sensor (312) and releasing the brake by means of a control unit (403) in dependence on an output signal of the sensor (312), wherein the at least one sensor (312) is fastened to the transport carriage (300) and the generator (402) is arranged outside the transport carriage (300), and wherein the method comprises transmitting a signal based on an output signal of the sensor (312) to the control unit (403).

15. The method according to one of claims 11 to 14, wherein the objects received are objects provided in a system and wherein the method comprises automatic filling of the transport carriage (300) with the objects discharged in the system.

## Revendications

1. Véhicule de transport (300) pour la prise en charge et le transport d'objets, lequel comprend un sac (303) destiné à être rempli avec les objets et un mécanisme de réglage (305, 306), sachant
- que le sac (303) est doté d'un fond (304) réglable dans le sens de la hauteur au moyen du mécanisme de réglage (305, 306),
- que le mécanisme de réglage est doté de sangles (305) pour serrer le sac (303) et de rouleaux (306) pour enrouler et dérouler les sangles (305),
- que les sangles (305) et les rouleaux (306) sont aménagés de manière à ce que le fond (304) puisse être abaissé par le poids des objets pris en charge, et
- qu'au moins un des rouleaux (306) peut être relié ou est relié au générateur (402) de manière à ce que le générateur (402) soit entraîné lors de l'abaissement du fond (304) et transforme l'énergie mécanique en énergie électrique.

2. Véhicule de transport (300) selon la revendication 1, sachant que le générateur (402) est disposé à l'extérieur du véhicule de transport (300) et sachant que le véhicule de transport (300) est doté en outre d'un élément de liaison (317), qui est aménagé pour la fixation du véhicule de transport (300) dans une position prédéterminée, dans laquelle l'au moins un des rouleaux (306) peut être raccordé au générateur (402).

3. Véhicule de transport selon la revendication 1, qui comprend de plus le générateur, sachant que le générateur transforme de l'énergie mécanique en énergie électrique et tient l'énergie électrique à disposition, en injectant l'énergie dans un réseau.

4. Véhicule de transport (300) selon l'une des revendications 1 à 3, sachant que le générateur (402) est doté d'un frein et sachant que le générateur (402) est relié ou peut être relié à l'au moins un des rouleaux (306) de manière à ce que le fond (304) ne s'abaisse sous le poids des objets pris en charge que si le frein est libéré.

5. Véhicule de transport selon la revendication 4, doté en outre d'au moins un capteur, qui est destiné à surveiller une hauteur des objets pris en charge,
- sachant que le véhicule de transport est doté de plus d'une unité de commande, qui est aménagée pour libérer le frein en fonction d'un signal de sortie du capteur, ou
- que le générateur (402) est disposé en dehors du véhicule de transport (300) et que le véhicule de transport (300) est doté en outre de moyens de communication (315) pour la transmission d'un signal, basé sur un signal de sortie du capteur (312), à une unité de commande (403), qui est aménagée pour libérer le frein en fonction d'un signal de sortie du capteur (312).

6. Véhicule de transport selon l'une des revendications 1 à 5, qui comprend en outre un moteur, sachant que le moteur est relié au mécanisme de réglage de manière à ce que le fond puisse être levé au moyen du moteur.

7. Système comprenant le véhicule de transport (300) selon l'une des revendications 1 à 6 et le générateur (402), sachant que le générateur (402) est compris dans le véhicule de transport ou est installé à l'extérieur du véhicule de transport.

8. Système selon la revendication 7, sachant que le générateur (402) est installé à l'extérieur du véhicule de transport (300), le système comprenant en outre
- au moins un élément de guidage (600), qui est aménagé pour amener le véhicule de transport (300) dans une position prédéterminée, dans laquelle l'au moins un des rouleaux (306) peut être raccordé au générateur (402), et / ou
- au moins un élément de liaison (405), qui est disposé à l'extérieur du véhicule de transport (300) pour la fixation du véhicule de transport (300) dans une position prédéterminée, dans laquelle l'au moins un des rouleaux (306) au moins prévu peut être raccordé au générateur (402).

9. Système selon revendication 7 ou 8, sachant que le générateur (402) est disposé à l'extérieur du véhicule de transport (300) et sachant que le générateur (402) met à disposition l'énergie électrique en injectant l'énergie électrique dans un réseau de courant (500).

10. Système selon l'une des revendications 7 à 9, sachant que le générateur (402) est doté d'un frein et sachant que le générateur (402) est relié ou peut être relié à l'au moins un des rouleaux (306) de manière à ce que le fond (304) ne puisse être abaissé sous le poids des objets pris en charge que si le frein est libéré, le système comprenant en outre au moins un capteur (312), destiné à contrôler la hauteur des objets pris en charge, et une unité de commande (403), sachant que unité de commande (403) est aménagée pour libérer le frein en fonction d'un signal de sortie du capteur (312).

11. Procédé comprenant
- la transmission à un générateur (400) d'une énergie mécanique, générée sur un mécanisme de réglage (305, 306) d'un véhicule de transport (300) pour la prise en charge et le transport d'objets, sachant que le véhicule de transport (300) est doté d'un sac (303) destiné à être rempli avec les objets et que le mécanisme de réglage est doté de sangles (305) pour serrer le sac (303) et de rouleaux (306) pour enrouler et dérouler les sangles (305), si un fond (304) du sac (303), réglable en hauteur au moyen du mécanisme de réglage (305, 306), est abaissé par le poids des objets pris en charge, sachant qu'au moins un des rouleaux (306) peut être relié ou est relié au générateur (402) de manière à ce que le générateur (402) soit entraîné lors de l'abaissement du fond (304), et
- la transformation de l'énergie mécanique en énergie électrique par le générateur (400).

12. Procédé selon la revendication 11, sachant que le générateur (402) est disposé à l'extérieur du véhicule de transport (300), comprenant de plus
- le guidage du véhicule de transport (300) dans une position prédéterminée, dans laquelle l'au moins un des rouleaux (306) peut être raccordé au générateur (402), au moyen d'au moins un élément de guidage (600), et / ou
- la fixation du véhicule de transport (300) dans une position prédéterminée, dans laquelle l'au moins un des rouleaux (306) peut être raccordé au générateur (402) au moyen d'au moins un élément de liaison (317, 405).

13. Procédé selon l'une des revendications 11 et 12, sachant que le générateur (402) est doté d'un frein et sachant que le générateur (402) est relié ou peut être relié à l'au moins un des rouleaux (306) de manière à ce que le fond (304) ne s'abaisse sous le poids des objets pris en charge que si le frein est libéré.

14. Procédé selon la revendication 13, comprenant de plus
- le contrôle de la hauteur des objets pris en charge au moyen d'au moins un capteur (312) et une libération du frein au moyen d'une unité de commande (403) en fonction d'un signal de sortie du capteur (312) ou
- un contrôle de la hauteur des objets pris en charge au moyen d'au moins un capteur (312) et une libération du frein au moyen d'une unité de commande (403) en fonction d'un signal de sortie du capteur (312), sachant que le capteur (312) au moins prévu est fixé sur le véhicule de transport (300) et que le générateur (402) est disposé à l'extérieur du véhicule de transport (300), et sachant que le procédé comprend une transmission à l'unité de commande (403) d'un signal basé sur un signal de sortie du capteur (312).

15. Procédé selon l'une des revendications 11 à 14, sachant que les objets pris en charge sont mis à disposition dans une installation et sachant que le procédé comprend un remplissage automatique du véhicule de transport (300) avec les objets délivrés dans l'installation.
